# EUROPEAN PATENT APPLICATION

(11) **EP 4 494 467 A1**
(43) Date of publication of application: **22.01.2025**
(21) Application number: 23770570.2
(22) Date of filing: 08.03.2023
(51) Int. Cl.: A01N 37/02, A01N 37/06, A01N 37/18, A01P 7/04, A01N 43/36

(54) **AGRICULTURE COMPOSITION**

(30) Priority: 15.03.2022 JP 2022039799
(71) Applicant: Nippon Kayaku Kabushiki Kaisha, Tokyo 100-0005 (JP)
(72) Inventor: HORI, Hiroaki, Kamisu-shi, Ibaraki 314-0255 (JP); OKUBO, Atsushi, Tokyo 100-0005 (JP); MATSUDA, Ryusei, Kamisu-shi, Ibaraki 314-0255 (JP); SUMI, Takuto, Kamisu-shi, Ibaraki 314-0255 (JP); FUJITA, Tadahide, Kamisu-shi, Ibaraki 314-0255 (JP); MURASE, Takanori, Kamisu-shi, Ibaraki 314-0255 (JP)
(74) Representative: Ter Meer Steinmeister & Partner
(86) International application number: PCT/JP2023/008744
(87) International publication number: WO 2023/176614

(57) **Abstract**

An object of the present invention is to provide a harmful organism control agent capable of achieving, at a low concentration, the control of agricultural or horticultural harmful organisms in which no difference in the control effect is observed between target harmful organism species, by an active ingredient ensuring human safety. The harmful organism control agent is an agricultural composition containing (a) a fatty acid ester; and (b) an amide compound, in which the (a) fatty acid ester is one or more selected from the group consisting of a (poly)glycerin fatty acid ester, a sucrose fatty acid ester, a (polyoxyethylene) sorbitan fatty acid ester, and a propylene glycol fatty acid ester, and the (b) amide compound is an amide compound represented by formula (1) and/or formula (2): in which in formula (1) or formula (2), R is a linear or branched, saturated or unsaturated hydrocarbon having 6 to 20 carbon atoms; Ra and Rb are each independently a hydrogen atom and/or an alkyl group having 1 to 4 carbon atoms; and x is an integer of 0 to 4.

## Description

### Technical Field

The present invention relates to an agricultural composition to be applied to harmful organism control in agriculture and horticulture, which includes a fatty acid ester and an amide compound. Specifically, the present invention relates to a spray composition for agricultural and horticultural crops, the spray composition including a highly safe fatty acid ester as an effective main component and an amide compound as an additive.

### Background Art

In order to stably supply agricultural and horticultural crops, control of insect pests and diseases is essential. Chemical agrochemicals are currently widely used to control those diseases and insect pests because of their excellent economic efficiency and control effect. However, when chemical agrochemicals are continuously used, the target diseases and insect pests may develop drug resistance. In recent years, consumers' awareness of agrochemicals has increased, and agrochemicals that are highly safe for the human body and the environment have been required. Although the effectiveness of control of diseases and insect pests by biological agrochemicals such as natural enemies and physical control using films and the like has been verified in some cases, the cost effectiveness is not satisfied at present.

Under such circumstances, harmful organism control compositions based on physical action, which are different from chemical agrochemicals, have been reported. For example, a harmful organism control composition including a water-soluble polymer as an active ingredient is described in Patent Literature 1, a harmful organism control composition including medium-chain fatty acid triglycerides having 8 to 10 carbon atoms as an active ingredient is described in Patent Literature 2, and a harmful organism control composition including sorbitan fatty acid esters as an active ingredient is described in Patent Literature 3. However, these described compositions have problems such as that a high active ingredient concentration is necessary for exhibiting a sufficient effect, and that significant differences in the control effect are recognized depending on the target harmful organism species. When a drug is sprayed at a high concentration in order to exhibit sufficient drug efficacy without species differences, there is a concern about phytotoxicity caused by the drug. In addition, there may be problems in that since the dilution ratio is low, preparation of a diluted liquid with water is frequent and complicated, and the cost effectiveness is lowered, for example, workability becomes poor.

In recent years, compositions improved in regard to these problems have been reported. Patent Literature 4 discloses a harmful organism control composition containing a polyglycerin fatty acid ester which has an HLB of 5 or less and is liquid at normal temperature and a nonionic surfactant, and it is described that a high control effect is exhibited against spider mites and aphids even when prepared into a highly diluted solution such as a 1000-fold dilution. Furthermore, Patent Literature 5 discloses a control agent for plant insect pests and/or plant diseases, including a polyglycerin fatty acid ester as an active ingredient, in which the polyglycerin fatty acid ester is an ester of at least one kind of fatty acid selected from fatty acids having 8 to 10 carbon atoms and at least one kind of polyglycerin obtained by polymerizing 3 to 10 glycerin molecules, and it is described that a uniformly high control effect is exhibited against a wide range of harmful organisms such as mites, thrips, aphids, whiteflies, gray mold, and powdery mildew, when the control agent is diluted 500 times with water and used. It has been shown that the use of various polyglycerin fatty acid esters as described above makes it possible to control a wide range of harmful organisms. However, there is a strong demand for further improvement in terms of cost effectiveness as compared with currently used chemical agrochemicals.

### Citation List

### Patent Literature

Patent Literature 1: JP H07-126105 A
Patent Literature 2: JP H11-29411 A
Patent Literature 3: JP 2006-137728 A
Patent Literature 4: WO 2011/108220 A
Patent Literature 5: WO 2014/058065 A

### Summary of Invention

### Technical Problem

The present invention was made in view of the problems in the prior art, and it is an object of the present invention to provide a harmful organism control agent capable of achieving control of agricultural or horticultural harmful organisms at a low concentration by means of an active ingredient ensuring safety for humans. Furthermore, it is an object of the present invention to provide a harmful organism control agent that does not exhibit any differences in the control effects depending on the target harmful organism species. Particularly, it is an object of the present invention to provide a harmful organism control agent having a sufficient control efficacy on spider mites, which are important agricultural harmful organisms, and thrips, which are difficult to control sufficiently by conventional technologies.

### Solution to Problem

The inventors of the present invention conducted intensive studies to solve the above-described problems, and as a result, the inventors paid attention to the physicochemical characteristics obtained by combining a fatty acid ester and an amide compound, which are known to be safe for the human body and the environment as food additives, and found that the combination provides a high control effect against harmful organisms even at a low concentration, by exhibiting high wet spreading property and adhesion on plant bodies, insect pests, or causative bacteria of diseases in agriculture and horticulture, thereby completing the present invention.

That is, the present invention relates to the inventions according to the following [1] to [14].
[1] An agricultural composition comprising (a) a fatty acid ester; and (b) an amide compound, wherein
   the (a) fatty acid ester is one or more selected from a group consisting of a (poly)glycerin fatty acid ester, a sucrose fatty acid ester, a (polyoxyethylene) sorbitan fatty acid ester, and a propylene glycol fatty acid ester, and
   the (b) amide compound is an amide compound represented by formula (1) and/or formula (2): 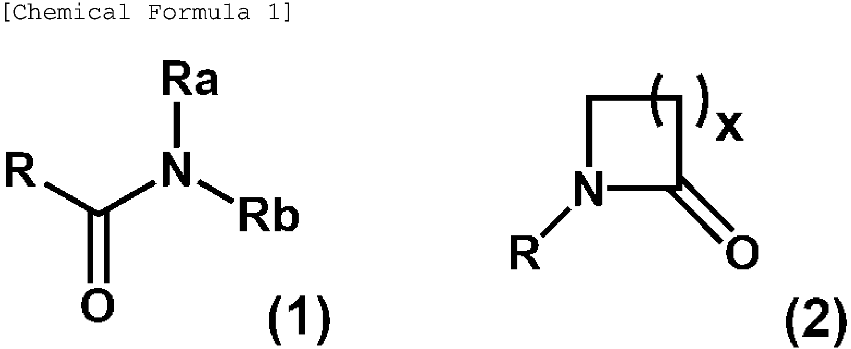
   wherein in formula (1) or formula (2), R is a linear or branched, saturated or unsaturated hydrocarbon having 6 to 20 carbon atoms; Ra and Rb are each independently a hydrogen atom and/or an alkyl group having 1 to 4 carbon atoms; and x is an integer of 0 to 4.
[2] The agricultural composition according to [1], wherein in the (b) amide compound, Ra and Rb in formula (1) are both a methyl group.
[3] The agricultural composition according to [1] or [2], wherein in the (b) amide compound, x in formula (2) is 2 or 3.
[4] The agricultural composition according to any one of [1] to [3], wherein the (b) amide compound is one or more selected from a group consisting of N,N-dimethylcaprylic acid amide, N,N-dimethylcapric acid amide, N,N-dimethyllauric acid amide, N,N-dimethylmyristic acid amide, N-caprylpyrrolidone, and N-laurylpyrrolidone.
[5] The agricultural composition according to any one of [1] to [4], wherein the (a) fatty acid ester is a fatty acid ester including a saturated fatty acid and/or unsaturated fatty acid having 8 to 22 carbon atoms.
[6] The agricultural composition according to any one of [1] to [5], wherein the (a) fatty acid ester includes one or more fatty acids selected from a group consisting of caprylic acid, capric acid, lauric acid, oleic acid, linoleic acid, ricinoleic acid, and erucic acid.
[7] The agricultural composition according to any one of [1] to [6], wherein a component content mass ratio in the composition is (a) fatty acid ester : (b) amide compound = 1 : 0.01 to 1 : 1.
[8] A composition for harmful organism control, comprising the agricultural composition according to any one of [1] to [7] as an active ingredient.
**[9]** The composition for harmful organism control according to [8], wherein the composition is intended for controlling an organism belonging to an animal order selected from the order Hamiptera, the order Acarina, the order Thysanoptera, and the order Lepidoptera.
**[10]** An aqueous dispersion liquid comprising the agricultural composition according to any one of [1] to [7] or the composition for harmful organism control according to [8] or [9]; and water.
**[11]** The aqueous dispersion liquid according to [10], wherein a concentration of the (a) fatty acid ester is 100 to 2000 ppm.
[12] The aqueous dispersion liquid according to [10] or [11], comprising a chemical agrochemical active ingredient selected from a fungicide, an insecticide, a miticide, an herbicide, and a plant growth regulator.
[13] A method for controlling a harmful organism, comprising directly spraying the aqueous dispersion liquid according to any one of [10] to [12] on a harmful organism or a crop where a harmful organism is generated.

### Advantageous Effects of Invention

The agricultural composition of the present invention exhibits an excellent control effect on harmful organisms for agricultural and horticultural crops, and since the (a) fatty acid ester, which is a main component of the agricultural composition, is degraded into a fatty acid having low toxicity and a polyhydric alcohol, the agricultural composition has low environmental impact and high safety. In this regard, many of these components have been used as food additives and are components whose safety to the human body is guaranteed. Furthermore, the (b) amide compound is a solvent with guaranteed safety, which has been used as a solvent for agrochemical emulsions and has also been used as a base for cosmetics and the like. Therefore, the safety of the agricultural composition of the present invention obtained by combining these components is extremely high. In addition, the agricultural composition of the present invention exhibits excellent wet spreading property and adhesion on the surface of a target plant, a target insect pest, or a target causative bacterium of a plant disease as compared with known compositions, and has a high control effect on a wide range of harmful organism species at a lower concentration. Therefore, a harmful organism control agent and a harmful organism control method, which are highly cost-effective, such as improvement in workability such as preparation of a diluted liquid, and reduction in drug cost, may be provided.

### Description of Embodiments

The present invention is an agricultural composition containing a specific (a) fatty acid ester and a specific (b) amide compound. When the (a) fatty acid ester and the (b) amide compound are used in combination, excellent wet spreading property and adhesion are exhibited on the surface of plants, insect pests, or causative bacteria of plant diseases, and an excellent control effect is exhibited as compared with a conventional harmful organism control composition based on physical action. In the present specification, the term "harmful organism control" means that a drug acts directly on insect pests belonging to an animal order such as the order Hamiptera, the order Acarina, the order Thysanoptera, and the order Lepidoptera, and causative bacteria of plant diseases, and physically weakens or kills and controls those harmful organisms by, for example, covering or partially adhering to harmful organisms to hinder the activity of the harmful organisms, or by blocking spiracles of insect pests.

Regarding the (a) fatty acid ester used in the present invention, at least one selected from a (poly)glycerin fatty acid ester, a sucrose fatty acid ester, a (polyoxyethylene) sorbitan fatty acid ester, a sorbitan fatty acid ester, and a propylene glycol fatty acid ester is suitable. These are components used in natural animal and plant oils, cosmetics, foods, food additives, and the like, and are also components excellent from the viewpoint of safety.

As the (a) fatty acid ester, a compound in which one or more saturated or unsaturated fatty acid molecules are ester-bonded to a hydroxy group of a polyol compound selected from the group consisting of (poly)glycerin, sucrose, (polyoxyethylene) sorbitan, and propylene glycol, is applied. When two or more molecules of the fatty acid bonded to a polyol compound are bonded, an ester compound of the same fatty acid may be used, or an ester compound of two or more different fatty acids may be used.

The fatty acid constituting the (a) fatty acid ester is preferably a saturated or unsaturated fatty acid having 4 to 30 carbon atoms, and more preferably a saturated or unsaturated fatty acid having 8 to 22 carbon atoms. Examples thereof include caprylic acid, capric acid, lauric acid, myristic acid, palmitic acid, oleic acid, stearic acid, isostearic acid, linoleic acid, ricinoleic acid, and erucic acid. The fatty acid is preferably one or more selected from the group consisting of caprylic acid, capric acid, lauric acid, oleic acid, linoleic acid, ricinoleic acid, and erucic acid.

As the (a) fatty acid ester, it is preferable to use a fatty acid ester having an esterification ratio of 10 to 90%, and more preferably a fatty acid ester having an esterification ratio of 20 to 85%. The esterification ratio is an index representing a proportion (%) of the number of hydroxy groups to which a fatty acid is ester-bonded among the hydroxy groups included in the polyol compound.

Examples of the (a) fatty acid ester include those shown below.

### <(Poly)glycerin Fatty Acid Ester>

"(Poly)glycerin fatty acid ester" means "a glycerin fatty acid ester or a polyglycerin fatty acid ester, which is one or more selected from the group consisting of these". Polyglycerin fatty acid ester is preferably an ester compound of a polyglycerin having a polymerization number of 2 to 20 with one or more fatty acids.

Preferred examples thereof include compounds in which glycerin or polyglycerin is ester-bonded to one or more saturated or unsaturated fatty acids having 4 to 30 carbon atoms, and more preferable examples thereof include compounds in which a polyglycerin having a polymerization number of 2 to 10 is ester-bonded to one or more saturated or unsaturated fatty acids having 8 to 22 carbon atoms.

Examples thereof include glycerin monocaprylic acid ester, glycerin dicaprylic acid ester, glycerin tricaprylic acid ester, glycerin capric acid ester, glycerin dicapric acid ester, glycerin tricapric acid ester, glycerin monolauric acid ester, glycerin dilauric acid ester, glycerin trilauric acid ester, glycerin monomyristic acid ester, glycerin dimyristic acid ester, glycerin trimyristic acid ester, glycerin monopalmitic acid ester, glycerin dipalmitic acid ester, glycerin tripalmitic acid ester, glycerin monostearic acid ester, glycerin distearic acid ester, glycerin tristearic acid ester, glycerin monooleic acid ester, glycerin dioleic acid ester, glycerin trioleic acid ester, glycerin acetic acid fatty acid ester, glycerin citric acid fatty acid ester, glycerin oxalic acid fatty acid ester, rapeseed oil, corn oil, cotton seed oil, olive oil, sesame oil, palm oil, vegetable oil, animal oil, hydrogenated oil, diglycerin monocaprylic acid ester, tetraglycerin monocaprylic acid ester, diglycerin monolauric acid ester, tetraglycerin monolauric acid ester, tetraglycerin dilauric acid ester, hexaglycerin monolauric acid ester, hexaglycerin trilauric acid ester, decaglycerin monolauric acid ester, decaglycerin dilauric acid ester, decaglycerin tetralauric acid ester, decaglycerin hexalauric acid ester, decaglycerin decalauric acid ester, glycerin monooleic acid ester, diglycerin monooleic acid ester, tetraglycerin monooleic acid ester, tetraglycerin pentaoleic acid ester, hexaglycerin monooleic acid ester, hexaglycerin pentaoleic acid ester, decaglycerin monooleic acid ester, decaglycerin decaoleic acid, diglycerin monostearic acid ester, tetraglycerin monostearic acid ester, tetraglycerin pentastearic acid ester, hexaglycerin monostearic acid ester, hexaglycerin pentastearic acid ester, decaglycerin monostearic acid ester, decaglycerin decastearic acid ester, decaglycerin octaerucic acid ester, decaglycerin decabehenic acid ester, and polyglycerin condensed ricinoleic acid ester such as hexaglycerin condensed ricinoleic acid ester.

The (poly)glycerin fatty acid ester is commercially available as POEM (trade name, manufactured by Riken Vitamin Co., Ltd.), SY GLYSTER (trade name, manufactured by Sakamoto Yakuhin Kogyo Co., Ltd.), or the like.

### <Sucrose Fatty Acid Ester>

Sucrose fatty acid ester is preferably a compound in which sucrose is ester-bonded to one or more saturated or unsaturated fatty acids having 4 to 30 carbon atoms, and more preferably a compound in which sucrose is ester-bonded to one or more saturated or unsaturated fatty acids having 8 to 22 carbon atoms.

Examples thereof include sucrose lauric acid ester, sucrose myristic acid ester, sucrose palmitic acid ester, sucrose stearic acid ester, sucrose oleic acid ester, and sucrose erucic acid ester.

Sucrose fatty acid esters are commercially available as RYOTO Sugar Ester (trade name, manufactured by Mitsubishi Chemical Foods Corporation) and the like.

### <(Polyoxyethylene) Sorbitan Fatty Acid Ester>

"(Polyoxyethylene) sorbitan fatty acid ester" means "a sorbitan fatty acid ester and a polyoxyethylene-sorbitan fatty acid ester, which is one or more selected from the group consisting of these". (Polyoxyethylene) sorbitan fatty acid ester is a compound in which a sorbitan derivative is bonded to an optional polyoxyethylene group, and one or more fatty acids are bonded thereto.

The (polyoxyethylene) sorbitan fatty acid ester is preferably a compound in which (polyoxyethylene) sorbitan is ester-bonded to one or more saturated or unsaturated fatty acids having 4 to 30 carbon atoms, and more preferably a compound in which (polyoxyethylene) sorbitan is ester-bonded to one or more saturated or unsaturated fatty acids having 8 to 22 carbon atoms.

Examples thereof include sorbitan lauric acid ester, sorbitan myristic acid ester, sorbitan palmitic acid ester, sorbitan stearic acid ester, sorbitan oleic acid ester, (polyoxyethylene) sorbitan lauric acid ester, (polyoxyethylene) sorbitan myristic acid ester, (polyoxyethylene) sorbitan palmitic acid ester, (polyoxyethylene) sorbitan stearic acid ester, and (polyoxyethylene) sorbitan oleic acid ester.

The (polyoxyethylene) sorbitan fatty acid ester is commercially available as SORBON (trade name, manufactured by TOHO Chemical Industry Co., Ltd.), NEW CALGEN (trade name, manufactured by TAKEMOTO OIL & FAT Co., Ltd.), or the like.

### <Propylene Glycol Fatty Acid Ester>

Propylene glycol fatty acid ester is preferably a compound in which propylene glycol is ester-bonded to one or more saturated or unsaturated fatty acids having 4 to 30 carbon atoms, and more preferably a compound in which propylene glycol is ester-bonded to one or more saturated or unsaturated fatty acids having 8 to 22 carbon atoms.

Examples thereof include propylene glycol monocaprylic acid ester, propylene glycol monocapric acid ester, propylene glycol monolauric acid ester, propylene glycol monopalmitic acid ester, propylene glycol monostearic acid ester, propylene glycol monooleic acid ester, propylene glycol monobehenic acid ester, propylene glycol dicaprylic acid ester, propylene glycol dicapric acid ester, propylene glycol dilauric acid ester, propylene glycol distearic acid ester, propylene glycol diisostearic acid ester, and propylene glycol dioleic acid ester.

The propylene glycol fatty acid ester is commercially available as, for example, RIKEMAL (trade name, manufactured by Riken Vitamin Co., Ltd.), NIKKOL (trade name, manufactured by Nikko Chemicals Co., Ltd.), or the like.

The fatty acid in the (a) fatty acid ester used in the present invention is preferably any one of caprylic acid, capric acid, lauric acid, oleic acid, linoleic acid, ricinoleic acid, and erucic acid from the viewpoint of wet spreading property, adhesion, and harmful organism control effect. From the viewpoint of adhesion and a risk of phytotoxicity, the (a) fatty acid ester is preferably a (poly)glycerin fatty acid ester, and as more preferred specific examples, diglycerin monocaprylic acid ester, diglycerin monolauric acid ester, tetraglycerin monolauric acid ester, diglycerin monooleic acid ester, tetraglycerin monooleic acid ester, tetraglycerin pentaoleic acid ester, hexaglycerin monooleic acid ester, hexaglycerin pentaoleic acid ester, and decaglycerin decaoleic acid ester are more preferred, while diglycerin monocaprylic acid ester, hexaglycerin pentaoleic acid ester, or decaglycerin decaoleic acid ester is particularly preferred.

The (a) fatty acid ester may be used singly, or two or more kinds of fatty acid esters may be mixed and used.

As the (b) amide compound used in the present invention, an amide compound represented by the following formula (1) and/or formula (2) is applied from the viewpoint of wet spreading property, adhesion, and harmful organism control effect.

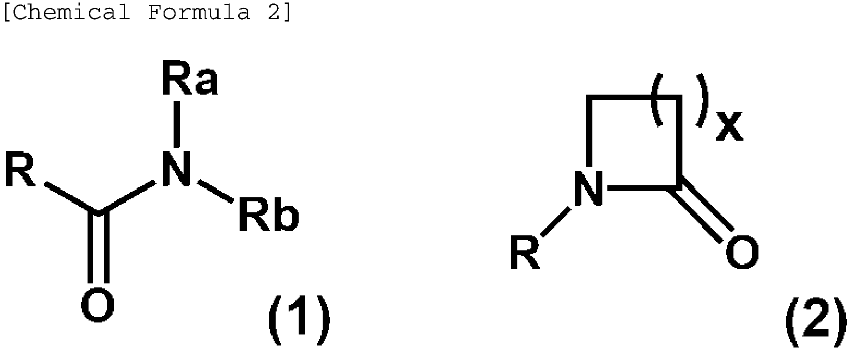

In formula (1) or formula (2), R is a linear or branched, saturated or unsaturated hydrocarbon having 6 to 20 carbon atoms, Ra and Rb are each independently a hydrogen atom and/or an alkyl group having 1 to 4 carbon atoms, and x is an integer of 0 to 4.

R is preferably a linear saturated hydrocarbon having 8 to 18 carbon atoms.

Examples of Ra and Rb in formula (1) include a hydrogen atom, methyl, ethyl, propyl, butyl, and hydroxyethyl. Ra and Rb are each preferably an alkyl group having 1 to 4 carbon atoms, and are more preferably both methyl groups.

Formula (2) is a cyclic amide (so-called lactam) in which a linear or branched, saturated or unsaturated hydrocarbon having 6 to 20 carbon atoms is N-substituted. The cyclic amide (lactam) moiety is an N-substituted cyclic amide (lactam) compound, being a 3-membered α-lactam when x is 0 in formula (2), a 4-membered β-lactam when x is 1, a 5-membered γ-lactam when x is 2, a 6-membered &-lactam when x is 3, or a 7-membered ε-lactam when x is 4. Preferably, x is 2 or 3, and a γ-lactam compound (2-pyrrolidone derivative) or a δ-lactam compound (2-piperidone derivative) is particularly preferable.

Specific preferable examples of the (b) amide compound include N,N-dimethylcaprylic acid amide, N,N-dimethylcapric acid amide, N,N-dimethyllauric acid amide, N,N-dimethylmyristic acid amide, N-capryl-2-pyrrolidone, and N-lauryl-2-pyrrolidone. N,N-dimethyllauric acid amide, N,N-dimethylmyristic acid amide, and N-lauryl-2-pyrrolidone are particularly preferable.

The component content mass ratio in the agricultural composition of the present invention is not particularly limited; however, from the viewpoints of the harmful organism control effect at the time of use and the phytotoxicity, the mass ratio of fatty acid ester : amide compound is suitably 1 : 0.01 to 1 : 10, preferably 1 : 0.05 to 1 : 5, and more preferably 1 : 0.1 to 1 : 1.

When the content of the (a) fatty acid ester is too low, the amount of the fatty acid ester adhered to a plant, an insect pest, or a causative bacterium of a disease, which is the target of spraying, is reduced, and the control effect on harmful organisms is insufficient when the agricultural composition is diluted to a low concentration. In addition, when the content of the (b) amide compound is too low, the wet spreading property on a plant, an insect pest, or a causative bacterium of a disease, which is the target of spraying, is deteriorated, and the control effect on harmful organisms is insufficient when the agricultural composition is diluted to a low concentration. In addition, when the content of the (b) amide compound is too high, there is a concern that problems such as a decrease in the amount of adhesion of the spray liquid due to excessively high wet spreading property, and an increase in the risk of phytotoxicity, may occur.

The agricultural composition of the present invention exhibits excellent wet spreading property and adhesion on the surface of plants, insect pests, or causative bacteria of plant diseases, and acts directly on harmful organisms such as insect pests and pathogenic bacteria in agriculture and horticulture, and physically weakens or kills those harmful organisms by covering and adhesion to target organisms. Therefore, the agricultural composition of the present invention may be applied as a harmful organism control agent containing the agricultural composition itself as an active ingredient. The present invention also includes an invention related to a composition for harmful organism control containing the agricultural composition as an active ingredient. It may be an advantage that the composition for harmful organism control of the present invention physically exhibits a control effect and is capable of controlling agricultural and horticultural harmful organisms without using so-called chemical agrochemical components. Therefore, a preferable aspect of the composition for harmful organism control according to the present invention is a composition that does not include any chemical agrochemical active ingredient selected from a fungicide, an insecticide, a miticide, an herbicide, and a plant growth regulator.

As described above, the agricultural composition of the present invention is suitable to be used alone as a harmful organism control composition; however, an optional agrochemical may be mixed in for the purpose of improving the control efficacy or adding additional efficacy to the extent that excellent physical characteristics of the present invention are not lost. Alternatively, the agricultural composition may include optional additive components for formulation.

Examples of the optional agrochemical include various agrochemical active ingredients such as an insecticide, a fungicide, an insecticide-fungicide, an herbicide, and a plant growth regulator.

Examples of the optional additive components for formulation include a surfactant intended for improving emulsifiability when the agricultural composition is diluted in water and used, and various solvents such as animal and vegetable oils, mineral oils, paraffin, water, polyethylene glycol, and alcohol for adjusting the appearance of the composition. Other examples include mineral or organic solid carriers such as silica gel, clay, silt, bentonite, lactose, and cyclodextrin. Examples of other optional additive components include an antifoaming component, a foam-suppressing component, a coloring component, and a fragrance component, and these are not particularly limited as long as they are generally used for agrochemicals.

The total content of the above-described solvent except water or the solid carrier is usually 0 to 90% by weight, preferably 0 to 50% by weight, and more preferably 0 to 30% by weight, with respect to the total amount of the composition for harmful organism control of the present invention.

The composition for harmful organism control of the present invention is used for controlling harmful organisms generated on farm products such as fruit trees, tea trees, vegetables, and flowers. Examples of harmful organisms to be controlled by this composition for harmful organism control include mites and insects that damage farm products, belonging to animal orders such as the order Acarina, the order Hemiptera, the order Lepidoptera, and the order Thysanoptera, and the composition has an excellent control effect particularly on spider mites and thrips.

Examples of organisms belonging to the order Acarina include spider mites, rust mites, and white mites. Examples of the spider mites include Tetranychus urticae, Tetranychus kanzawai, Panonychus citri, and Panonychus ulmi. Examples of the rust mites include Aculops lycopersici and Aculops pelekassi. Examples of the white mites include Polyphagotarsonemus latus.

Examples of organisms belonging to the order Hemiptera include aphids, whiteflies, and scale insects. Examples of the aphids include Aphis gossypii and Myzus persicae. Examples of the whiteflies include Trialeurodes vaporariorum and Bemisia tabaci. Examples of the scale insects include Pseudaulacaspis pentagona.

Examples of organisms belonging to the order Lepidoptera include Plutella xylostella and Spodoptera litura.

Examples of organisms belonging to the order Thysanoptera include Frankliniella occidentalis, Thrips palmi, Scirtothrips dorsalis, Frankliniella intonsa, and Thrips hawaiiensis.

In addition, the composition for harmful organism control of the present invention is also effective in controlling diseases caused by fungi, such as powdery mildew, occurring in vegetables, flowers, and fruit trees.

The composition for harmful organism control of the present invention is usually used as a harmful organism control agent in which an aqueous dispersion liquid prepared by diluting the composition with water at the time of spraying is used as a spray liquid. By spraying the aqueous dispersion liquid in a sufficient amount on the leaf surface of a plant with parasitic harmful organisms, the harmful organisms on crops for agriculture and horticulture may be controlled. The aqueous dispersion liquid may be an aqueous solution in which the (a) fatty acid ester and/or the (b) amide compound are uniformly dissolved, or may be in a state in which the (a) fatty acid ester and/or the (b) amide compound are dispersed and emulsified in water.

The concentration of the (a) fatty acid ester in the aqueous dispersion liquid of the present invention is preferably 50 to 5000 ppm, and more preferably 100 to 2000 ppm. The aqueous dispersion liquid can be prepared by diluting the agricultural composition of the present invention with water after adjusting the concentration of the (a) fatty acid ester to be within the above range.

The composition for harmful organism control of the present invention acts directly on agricultural or horticultural harmful organisms to bring about a control effect; however, for the purpose of improving the control efficacy and adding additional efficacy, an optional agrochemical active ingredient may be mixed in to the extent that the physical characteristics of the composition for harmful organism control of the present invention are not lost. In that case, the composition may be applied as the spray liquid including the optional chemical agrochemical active ingredient selected from a fungicide, an insecticide, a miticide, an herbicide, and a plant growth regulator. In that case, a spray liquid may be prepared by adding the optional chemical agrochemical active ingredient or a formulation thereof to the aqueous dispersion liquid of the present invention, or the aqueous dispersion liquid of the present invention may be prepared by adding the composition for harmful organism control of the present invention to an agrochemical spray liquid including the optional chemical agrochemical active ingredient.

Specifically, a method for preparing an aqueous dispersion liquid of the present invention and a method for controlling a harmful organism will be described below. An aqueous dispersion liquid may be adjusted by adding 100 to 10000 parts by mass of water as appropriate to 1 part by mass of the composition for harmful organism control of the present invention such that the amount of the (a) fatty acid ester is 50 to 5000 ppm or 100 to 2000 ppm, thoroughly stirring the mixture, and forming a uniform mixed liquid.

By spraying a sufficient amount of the aqueous dispersion liquid onto a harmful organism or a crop on which a harmful organism has been generated, according to a conventional method using a hand spray, a shoulder sprayer, a power sprayer, a boom sprayer, a speed sprayer, or the like, the harmful organism can be controlled.

The composition for harmful organism control of the present invention achieves controlling as the active ingredient acts directly on a harmful organism. In addition, despite that the composition for harmful organism control of the present invention is a formulation having a physical control effect, a high harmful organism control effect may be achieved even as an aqueous dispersion liquid containing the fatty acid ester as an active ingredient at a low concentration, as described above.

When the composition for harmful organism control of the present invention is diluted in water and sprayed, the composition including the (a) fatty acid ester adheres to the surface of the skin shell of a target harmful organism, particularly around the spiracles, and physically achieves control of the harmful organism by an action such as blocking the spiracles of the target harmful organism. Therefore, the composition for harmful organism control of the present invention has a high control effect on a plurality of kinds of harmful organisms (for example, spider mites and thrips) and on harmful organisms at each stage such as larvae, nymphs, and imagoes, and may simultaneously control a plurality of harmful organisms by one-time spraying.

### Examples

Hereinafter, the present invention will be described more specifically by way of Examples.

### Example 1

70 parts by mass of decaglycerin decaoleic acid ester (Sakamoto Yakuhin Kogyo Co., Ltd.; trade name SY GLYSTER DAO-7S) and 30 parts by mass of N,N-dimethyl fatty acid (C12-14) amide (Stepan Company; trade name HALLCOMID M-12-14) were mixed to obtain an agricultural composition of the present invention.

### Example 2

70 parts by mass of diglycerin monocaprylic acid ester (Sakamoto Yakuhin Kogyo Co., Ltd.; trade name SY GLYSTER MCA-150) and 30 parts by mass of N,N-dimethyl fatty acid (C12-14) amide (Stepan Company; trade name HALLCOMID M-12-14) were mixed to obtain an agricultural composition of the present invention.

### Example 3

70 parts by mass of glycerin monocaprylic acid ester (Kao Corporation; trade name KAO HOMOTEX PT) and 30 parts by mass of N,N-dimethyl fatty acid (C12-14) amide (Stepan Company; trade name HALLCOMID M-12-14) were mixed to obtain an agricultural composition of the present invention.

### Example 4

70 parts by mass of sorbitan monolauric acid ester (TAKEMOTO OIL & FAT Co., Ltd.; trade name NEW CALGEN D-931) and 30 parts by mass of N,N-dimethyl fatty acid (C12-14) amide (Stepan Company; trade name HALLCOMID M-12-14) were mixed to obtain an agricultural composition of the present invention.

### Example 5

70 parts by mass of polyoxyethylene (20) sorbitan monolauric acid ester (TAKEMOTO OIL & FAT Co., Ltd.; trade name NEW CALGEN D-941) and 30 parts by mass of N,N-dimethyl fatty acid (C12-14) amide (Stepan Company; trade name HALLCOMID M-12-14) were mixed to obtain an agricultural composition of the present invention.

### Example 6

70 parts by mass of propylene glycol monolauric acid ester (RIKEN VITAMIN Co., Ltd.; trade name TYPE-BP) and 30 parts by mass of N,N-dimethyl fatty acid (C12-14) amide (Stepan Company; trade name HALLCOMID M-12-14) were mixed to obtain an agricultural composition of the present invention.

### Example 7

70 parts by mass of sucrose oleic acid ester (Mitsubishi Chemical Foods Corporation; trade name RYOTO Sugar Ester O-170) and 30 parts by mass of N,N-dimethyl fatty acid (C12-14) amide (Stepan Company; trade name HALLCOMID M-12-14) were mixed to obtain an agricultural composition of the present invention.

### Example 8

70 parts by mass of diglycerin monocaprylic acid ester (Sakamoto Yakuhin Kogyo Co., Ltd.; trade name SY GLYSTER MCA-150) and 30 parts by mass of N,N-dimethyl fatty acid (C8-10) amide (Stepan Company; trade name HALLCOMID M-8-10) were mixed to obtain an agricultural composition of the present invention.

### Example 9

70 parts by mass of diglycerin monocaprylic acid ester (Sakamoto Yakuhin Kogyo Co., Ltd.; trade name SY GLYSTER MCA-150) and 30 parts by mass of N-lauryl-2-pyrrolidone (Stepan Company; trade name Agsolex 12) were mixed to obtain an agricultural composition of the present invention.

### Example 10

50 parts by mass of diglycerin monocaprylic acid ester (Sakamoto Yakuhin Kogyo Co., Ltd.; trade name SY GLYSTER MCA-150) and 50 parts by mass of N,N-dimethyl fatty acid (C12-14) amide (Stepan Company; trade name HALLCOMID M-12-14) were mixed to obtain an agricultural composition of the present invention.

### Example 11

90 parts by mass of diglycerin monocaprylic acid ester (Sakamoto Yakuhin Kogyo Co., Ltd.; trade name SY GLYSTER MCA-150) and 10 parts by mass of N,N-dimethyl fatty acid (C12-14) amide (Stepan Company; trade name HALLCOMID M-12-14) were mixed to obtain an agricultural composition of the present invention.

### Example 12

70 parts by mass of decaglycerin decaoleic acid ester (Sakamoto Yakuhin Kogyo Co., Ltd.; trade name SY GLYSTER DAO-7S) and 30 parts by mass of N-lauryl-2-pyrrolidone (Stepan Company; trade name Agsolex 12) were mixed to obtain an agricultural composition of the present invention.

### Example 13

70 parts by mass of polyoxyethylene (20) sorbitan monolauric acid ester (TAKEMOTO OIL & FAT Co., Ltd.; trade name NEW CALGEN D-941) and 30 parts by mass of N-lauryl-2-pyrrolidone (Stepan Company; trade name Agsolex 12) were mixed to obtain an agricultural composition of the present invention.

### Example 14

50 parts by mass of diglycerin monocaprylic acid ester (Sakamoto Yakuhin Kogyo Co., Ltd.; trade name SY GLYSTER MCA-150) and 50 parts by mass of N-lauryl-2-pyrrolidone (Stepan Company; trade name Agsolex 12) were mixed to obtain an agricultural composition of the present invention.

### Example 15

90 parts by mass of diglycerin monocaprylic acid ester (Sakamoto Yakuhin Kogyo Co., Ltd.; trade name SY GLYSTER MCA-150) and 10 parts by mass of N-lauryl-2-pyrrolidone (Stepan Company; trade name Agsolex 12) were mixed to obtain an agricultural composition of the present invention.

### Comparative Example 1

Diglycerin monocaprylic acid ester (Sakamoto Yakuhin Kogyo Co., Ltd.; trade name SY GLYSTER MCA-150) was used as an agricultural composition of Comparative Example.

### Comparative Example 2

Sorbitan monolauric acid ester (TAKEMOTO OIL & FAT Co., Ltd.; trade name NEW CALGEN D-931) was used as an agricultural composition for Comparative Example.

### Comparative Example 3

Propylene glycol monolauric acid ester (RIKEN VITAMIN Co., Ltd.; trade name TYPE-BP) was used as an agricultural composition of Comparative Example.

### Comparative Example 4

N,N-dimethyl fatty acid (C8-10) amide (Stepan Company; trade name HALLCOMID M-8-10) was used as an agricultural composition of Comparative Example.

### Comparative Example 5

70 parts by mass of water and 30 parts by mass of N,N-dimethyl fatty acid (C8-10) amide (Stepan Company; trade name HALLCOMID M-8-10) were mixed to obtain an agricultural composition of Comparative Example.

### Comparative Example 6

N,N-dimethyl fatty acid (C12-14) amide (Stepan Company; trade name HALLCOMID M-12-14) was used as an agricultural composition of Comparative Example.

### Comparative Example 7

70 parts by mass of water and 30 parts by mass of N,N-dimethyl fatty acid (C12-14) amide (Stepan Company; trade name HALLCOMID M-12-14) were mixed to obtain an agricultural composition of Comparative Example.

### Comparative Example 8

N-lauryl-2-pyrrolidone (Stepan Company; trade name Agsolex 12) was used as an agricultural composition of Comparative Example.

### Comparative Example 9

70 parts by mass of water and 30 parts by mass of N-lauryl-2-pyrrolidone (Stepan Company; trade name Agsolex 12) were mixed to obtain an agricultural composition of Comparative Example.

### Comparative Example 10

70 parts by mass of diglycerin monocaprylic acid ester (Sakamoto Yakuhin Kogyo Co., Ltd.; trade name SY GLYSTER MCA-150) and 30 parts by mass of methyl laurate (Kao Corporation; trade name EXCEPARL ML-85) to obtain an agricultural composition of Comparative Example.

### Comparative Example 11

70 parts by mass of diglycerin monocaprylic acid ester (Sakamoto Yakuhin Kogyo Co., Ltd.; trade name SY GLYSTER MCA-150) and 30 parts by mass of oleic acid were mixed to obtain an agricultural composition of Comparative Example.

### Comparative Example 12

70 parts by mass of diglycerin monocaprylic acid ester (Sakamoto Yakuhin Kogyo Co., Ltd.; trade name SY GLYSTER MCA-150) and 30 parts by mass of lauryl alcohol were mixed to obtain an agricultural composition of Comparative Example.

### Comparative Example 13

70 parts by mass of diglycerin monocaprylic acid ester (Sakamoto Yakuhin Kogyo Co., Ltd.; trade name SY GLYSTER MCA-150) and 30 parts by mass of polyoxyethylene lauryl ether (Kao Corporation; trade name EMULGEN 108) were mixed to obtain an agricultural composition of Comparative Example.

### Comparative Example 14

70 parts by mass of diglycerin monocaprylic acid ester (Sakamoto Yakuhin Kogyo Co., Ltd.; trade name SY GLYSTER MCA-150) and 30 parts by mass of polyoxyethylene lauric acid ester (NOF Corporation; trade name NONION L-4) were mixed to obtain an agricultural composition of Comparative Example.

### Biological Test Example 1: Test for Controlling Tetranychus urticae

Kidney bean leaves were cut into squares that measured 2.5 cm on one side, and the cut leaves were placed on absorbent cotton moistened with water. Ten Tetranychus urticae imagoes were released thereon. 30 mL of each agricultural composition diluted 1000 times with water was sprayed on the kidney bean leaves by using a hand spray. After air drying, the bean leaves were transferred into a plastic cup and stored in a constant temperature chamber at 25°C. Two days after the treatment, the life and death of the imagoes was observed, and the death rate was calculated.

The results are summarized in Table 1.

### Biological Test Example 2: Test for Controlling Thrips palmi

Kidney bean leaves were cut into squares that measured 2.5 cm on one side, and the cut leaves were placed on absorbent cotton moistened with water. Ten first instar larvae of Thrips palmi were released thereon. 30 mL of the agricultural composition diluted 500 times with water was sprayed on the kidney bean leaves using a hand spray. After air drying, the larvae were kept in a constant temperature chamber at 25°C. One day after the treatment, life and death was observed, and the death rate was calculated. In addition, the state of the kidney bean leaves after the test was observed, and the phytotoxicity was also evaluated.

### <Evaluation Criteria for Phytotoxicity>

-: No change on the leaf surface
±: Slight damage is recognized on the leaf surface
+: Damage is recognized on part of the leaf surface
++: Damage is recognized on the entire surface of the leaf surface

The results are summarized in Table 1.

**[Table 1]**

| Sample | Test Example 1 | Test Example 2 | Test Example 2 |
|---|---|---|---|
| | Spider mite imagoes | Thrip larvae | Leaf shape phytotoxicity |
| Example 1 | 100 | 100 | - |
| Example 2 | 100 | 100 | ± |
| Example 3 | 100 | 100 | ± |
| Example 4 | 100 | 100 | - |
| Example 5 | 100 | 100 | + |
| Example 6 | 100 | 90 | + |
| Example 7 | 100 | 100 | - |
| Example 8 | 100 | 100 | - |
| Example 9 | 100 | 100 | - |
| Example 10 | 100 | 100 | + |
| Example 11 | 100 | 100 | - |
| Example 12 | 100 | 100 | - |
| Example 13 | 100 | 100 | - |
| Example 14 | 100 | 100 | + |
| Example 15 | 100 | 100 | - |
| Comparative Example 1 | 60 | 20 | - |
| Comparative Example 2 | 0 | 20 | - |
| Comparative Example 3 | 100 | 50 | - |
| Comparative Example 4 | 100 | 0 | ++ |
| Comparative Example 5 | 100 | 0 | - |
| Comparative Example 6 | 100 | 100 | +++ |
| Comparative Example 7 | 100 | 50 | + |
| Comparative Example 8 | 100 | 100 | +++ |
| Comparative Example 9 | 100 | 100 | ++ |
| Comparative Example 10 | 50 | 40 | - |
| Comparative Example 11 | 80 | 0 | - |
| Comparative Example 12 | 30 | 20 | - |
| Comparative Example 13 | 60 | 0 | - |
| Comparative Example 14 | 70 | 20 | - |

As shown in the results of Test Examples 1 and 2, it was found that the agricultural composition of the present invention has a high insecticidal effect on different harmful organisms such as Tetranychus urticae and Thrips palmi. In addition, it was verified that the phytotoxicity symptoms for plants remained at the level without symptoms to a level with slight damage. On the other hand, as in the compositions of Comparative Examples 1 to 3, compositions including the (a) fatty acid ester alone partially exhibited a high insecticidal effect on Tetranychus urticae; however, a high insecticidal effect that also achieved the control of Thrips palmi was not recognized. In Comparative Examples 4 to 9, the (b) amide compound was tested alone, and it was shown that strong phytotoxic symptoms were exhibited at the same time under the conditions of exhibiting a high insecticidal effect, while under the conditions in which the phytotoxic symptoms were alleviated, a sufficient insecticidal effect was not obtained. In Comparative Examples 10 to 14, the amide compound was changed to various aliphatic compounds; however, none of them showed a sufficient insecticidal effect.

### Industrial Applicability

The present invention provides an agricultural composition that kills harmful organisms by spraying a spray liquid prepared by diluting the composition with water on crops. Therefore, the agricultural composition of the present invention is utilized for the purpose of controlling harmful organisms in agricultural and horticultural plants. In addition, the agricultural composition according to the present invention contains, as an active ingredient, a fatty acid ester that ensures safety for the human body, and exhibits a sufficient harmful organism control effect upon application at a low concentration. Furthermore, since the agricultural composition of the present invention has a high control effect on various harmful organisms, the present invention provides a composition for harmful organism control which can be used as an agrochemical for harmful organism control in agriculture and horticulture capable of simultaneously controlling a plurality of types of target organisms in one-time application, and use applications of the composition.

## Claims

1. An agricultural composition comprising (a) a fatty acid ester; and (b) an amide compound, wherein
the (a) fatty acid ester is one or more selected from a group consisting of a (poly)glycerin fatty acid ester, a sucrose fatty acid ester, a (polyoxyethylene) sorbitan fatty acid ester, and a propylene glycol fatty acid ester, and
the (b) amide compound is an amide compound represented by formula (1) and/or formula (2): 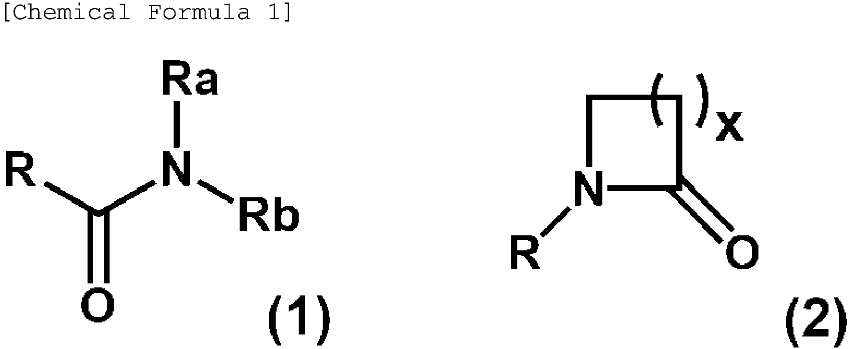
wherein in formula (1) or formula (2), R is a linear or branched, saturated or unsaturated hydrocarbon having 6 to 20 carbon atoms; Ra and Rb are each independently a hydrogen atom and/or an alkyl group having 1 to 4 carbon atoms; and x is an integer of 0 to 4.

2. The agricultural composition according to claim 1, wherein in the (b) amide compound, Ra and Rb in formula (1) are both a methyl group.

3. The agricultural composition according to claim 1 or 2, wherein in the (b) amide compound, x in formula (2) is 2 or 3.

4. The agricultural composition according to any one of claims 1 to 3, wherein the (b) amide compound is one or more selected from a group consisting of N,N-dimethylcaprylic acid amide, N,N-dimethylcapric acid amide, N,N-dimethyllauric acid amide, N,N-dimethylmyristic acid amide, N-caprylpyrrolidone, and N-laurylpyrrolidone.

5. The agricultural composition according to any one of claims 1 to 4, wherein the (a) fatty acid ester is a fatty acid ester including a saturated fatty acid and/or unsaturated fatty acid having 8 to 22 carbon atoms.

6. The agricultural composition according to any one of claims 1 to 5, wherein the (a) fatty acid ester includes one or more fatty acids selected from a group consisting of caprylic acid, capric acid, lauric acid, oleic acid, linoleic acid, ricinoleic acid, and erucic acid.

7. The agricultural composition according to any one of claims 1 to 6, wherein a component content mass ratio in the composition is (a) fatty acid ester : (b) amide compound = 1 : 0.01 to 1 : 1.

8. A composition for harmful organism control, comprising the agricultural composition according to any one of claims 1 to 7 as an active ingredient.

9. The composition for harmful organism control according to claim 8, wherein the composition is intended for controlling an organism belonging to an animal order selected from the order Hamiptera, the order Acarina, the order Thysanoptera, and the order Lepidoptera.

10. An aqueous dispersion liquid comprising the agricultural composition according to any one of claims 1 to 7 or the composition for harmful organism control according to claim 8 or 9; and water.

11. The aqueous dispersion liquid according to claim 10, wherein a concentration of the (a) fatty acid ester is 100 to 2000 ppm.

12. The aqueous dispersion liquid according to claim 10 or 11, comprising a chemical agrochemical active ingredient selected from a fungicide, an insecticide, a miticide, an herbicide, and a plant growth regulator.

13. A method for controlling a harmful organism, comprising directly spraying the aqueous dispersion liquid according to any one of claims 10 to 12 on a harmful organism or a crop where a harmful organism is generated.

## Amended claims

### Amended claims under Art. 19.1 PCT

1. (Amended) An agricultural composition comprising (a) a fatty acid ester; and (b) an amide compound, wherein
the (a) fatty acid ester is one or more selected from a group consisting of a (poly)glycerin fatty acid ester, a sucrose fatty acid ester, a (polyoxyethylene) sorbitan fatty acid ester, and a propylene glycol fatty acid ester,
the (b) amide compound is an amide compound represented by formula (1) and/or formula (2): 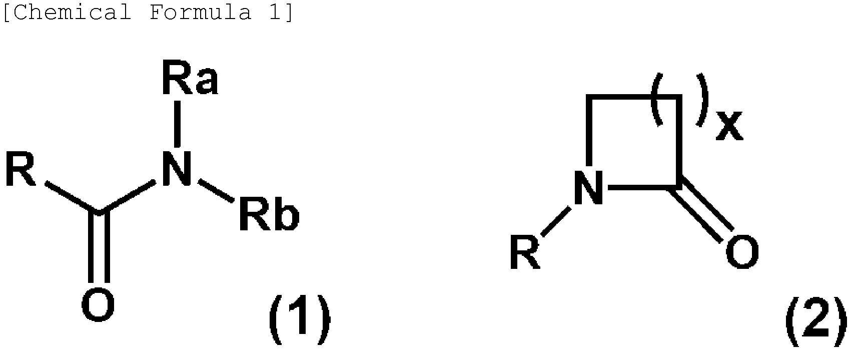
wherein in formula (1) or formula (2), R is a linear or branched, saturated or unsaturated hydrocarbon having 6 to 20 carbon atoms; Ra and Rb are each independently a hydrogen atom and/or an alkyl group having 1 to 4 carbon atoms; and x is an integer of 0 to 4, and
the agricultural composition does not include a chemical agrochemical active ingredient selected from a fungicide, an insecticide, a miticide, an herbicide, and a plant growth regulator.

2. The agricultural composition according to claim 1, wherein in the (b) amide compound, Ra and Rb in formula (1) are both a methyl group.

3. The agricultural composition according to claim 1 or 2, wherein in the (b) amide compound, x in formula (2) is 2 or 3.

4. The agricultural composition according to any one of claims 1 to 3, wherein the (b) amide compound is one or more selected from a group consisting of N,N-dimethylcaprylic acid amide, N,N-dimethylcapric acid amide, N,N-dimethyllauric acid amide, N,N-dimethylmyristic acid amide, N-caprylpyrrolidone, and N-laurylpyrrolidone.

5. The agricultural composition according to any one of claims 1 to 4, wherein the (a) fatty acid ester is a fatty acid ester including a saturated fatty acid and/or unsaturated fatty acid having 8 to 22 carbon atoms.

6. The agricultural composition according to any one of claims 1 to 5, wherein the (a) fatty acid ester includes one or more fatty acids selected from a group consisting of caprylic acid, capric acid, lauric acid, oleic acid, linoleic acid, ricinoleic acid, and erucic acid.

7. The agricultural composition according to any one of claims 1 to 6, wherein a component content mass ratio in the composition is (a) fatty acid ester : (b) amide compound = 1 : 0.01 to 1 : 1.

8. A composition for harmful organism control, comprising the agricultural composition according to any one of claims 1 to 7 as an active ingredient.

9. The composition for harmful organism control according to claim 8, wherein the composition is intended for controlling an organism belonging to an animal order selected from the order Hamiptera, the order Acarina, the order Thysanoptera, and the order Lepidoptera.

10. An aqueous dispersion liquid comprising the agricultural composition according to any one of claims 1 to 7 or the composition for harmful organism control according to claim 8 or 9; and water.

11. The aqueous dispersion liquid according to claim 10, wherein a concentration of the (a) fatty acid ester is 100 to 2000 ppm.

12. The aqueous dispersion liquid according to claim 10 or 11, comprising a chemical agrochemical active ingredient selected from a fungicide, an insecticide, a miticide, an herbicide, and a plant growth regulator.

13. A method for controlling a harmful organism, comprising directly spraying the aqueous dispersion liquid according to any one of claims 10 to 12 on a harmful organism or a crop where a harmful organism is generated.

Statement under Art. 19.1 PCT
Claims 1 is amended to specify that "the agricultural composition does not include a chemical agrochemical active ingredient selected from a fungicide, an insecticide, a miticide, an herbicide, and a plant growth regulator." The amendment is supported by the paragraph [0015] of the specification as filed.
